(19) Europäisches Patentamt
European Patent Office
Office européen des brevets

(11) **EP 4 023 480 A2**

(12) **EUROPÄISCHE PATENTANMELDUNG**

(43) Veröffentlichungstag:
06.07.2022 Patentblatt 2022/27

(21) Anmeldenummer: 21210169.5

(22) Anmeldetag: 24.11.2021

(51) Internationale Patentklassifikation (IPC):
**B60K 17/04** (2006.01)    **B60K 17/22** (2006.01)
**B60K 17/34** (2006.01)

(52) Gemeinsame Patentklassifikation (CPC):
**B60K 17/04; B60K 17/22; B60K 17/34;**
B60Y 2200/221

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: 18.12.2020 DE 102020134114

(71) Anmelder: **Deere & Company**
**Moline, IL 61265 (US)**

(72) Erfinder:
• **RAISCH, STEFAN**
**68163 Mannheim (DE)**
• **GUGEL, RAINER**
**68163 Mannheim (DE)**
• **EISENHARDT, CHRISTOPH**
**68163 Mannheim (DE)**
• **MUELLER, DAVID**
**68163 Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(54) **GETRIEBE UND LANDWIRTSCHAFTLICHES ODER INDUSTRIELLES NUTZFAHRZEUG**

(57) Die Erfindung betrifft ein Getriebe (20) zum Übertragen eines von einem Antriebsmotor (18) erzeugten Drehmoments auf mindestens eine vordere und/oder hintere Antriebsachse (14, 16) eines landwirtschaftlichen oder industriellen Nutzfahrzeugs (10), mit mindestens einer Hauptgetriebeeinheit (22). Die Hauptgetriebeeinheit (22) umfasst eine Eingangswelle (100) mit einer ersten Rotationsachse (102) und eine Ausgangswelle (104) mit einer zweiten Rotationsachse (106) und eine erste Vorgelegewelle (108) mit einer dritten Rotationsachse (110), wobei die Eingangswelle (100) und die Ausgangswelle (104) und die erste Vorgelegewelle (108) parallel zueinander angeordnet sind. Die erste Rotationsachse (102) liegt in einer ersten Ebene (112), die zweite Rotationsachse (106) in einer zweiten Ebene (114) und die dritte Rotationsachse (110) in einer dritten Ebene (116) und die erste, zweite und dritte Ebene (112, 114, 116) sind parallel zueinander angeordnet. Ausserdem sind die erste, zweite und dritte Ebene (112, 114, 116) orthogonal zu einer Getriebemittelebene (118) angeordnet und die erste Rotationsachse (102) ist in der Getriebemittelebene (118) angeordnet. Die zweite Ebene (114) ist zwischen der ersten und dritten Ebene (112, 116) angeordnet. Die Erfindung betrifft weiter ein landwirtschaftliches oder industrielles Nutzfahrzeug (10), umfassend ein solches Getriebe (20).

FIG. 1

**EP 4 023 480 A2**

**Beschreibung**

Die Erfindung betrifft ein Getriebe gemäss dem Oberbegriff des unabhängigen Anspruchs 1 und ein landwirtschaftliches oder industrielles Nutzfahrzeug gemäss dem Oberbegriff des unabhängigen Anspruchs 13.

In landwirtschaftlichen oder industriellen Nutzfahrzeugen, bevorzugt landwirtschaftlichen oder industriellen Zugfahrzeugen, besonders bevorzugt Traktoren oder Schleppern, kommen heute eine Vielzahl unterschiedlicher Getriebe, z. B. stufenlose Getriebe (IVT), teillastschaltbare Getriebe (PPST) oder volllastschaltbare Getriebe (PST) zum Einsatz. Dabei ist im Allgemeinen das Getriebe eines Nutzfahrzeugs in eine höhere Antriebsstrangarchitektur des gesamten Nutzfahrzeugs eingebettet. Eine übliche Antriebsstrangarchitektur sieht eine Längsarchitektur mit einem Antriebsmotor oder Motor vor, der entlang einer Längsachse des Nutzfahrzeugs, also einer in Längsrichtung des Nutzfahrzeugs verlaufenden Achse, oder entlang einer Vorwärtsfahrrichtung des Fahrzeugs in einer vorderen Hälfte des Nutzfahrzeugs angeordnet ist. Das Nutzfahrzeug, insbesondere der Antriebsmotor, kann ausserdem eine Kurbelwelle umfassen, die insbesondere in der Nähe oder entlang einer Fahrzeugmittelebene, insbesondere einer vertikalen Fahrzeugmittelebene angeordnet sein kann. Das Nutzfahrzeug umfasst weiter ein Getriebe, welches wiederum eine Hauptgetriebeeinheit umfasst. Mit dem Getriebe können die Bodeneingriffsmittel, beispielsweise Räder und/oder Ketten und/oder Raupen, des Nutzfahrzeugs angetrieben werden (Antrieb, Traktion). Das Getriebe, insbesondere die Hauptgetriebeeinheit, befindet sich entlang der Längsachse bzw. entgegen der Vorwärtsfahrrichtung hinter dem Antriebsmotor in Richtung des hinteren Endes des Fahrzeugs, insbesondere kann die Hauptgetriebeeinheit direkt am Antriebsmotor angeordnet sein. Die Eingangswelle des Getriebes, insbesondere der Hauptgetriebeeinheit, kann mit der Kurbelwelle des Motors verbunden und/oder antreibbar sein. Die Kurbelwellenachsen der Kurbelwelle und eine erste Rotationsachse der Eingangswelle des Motors können koaxial zueinander ausgerichtet und/oder angeordnet sein. Alternativ können die Kurbelwellenachse und die erste Rotationsachse zueinander parallel verschoben oder in einem Winkel zueinander angeordnet sein. Die Ausgangswelle des Getriebes, insbesondere der Hauptgetriebeeinheit, kann zum Antrieb der Bodeneingriffsmittel mit einem Vorder- und/oder Hinterachsmodul verbindbar sein. Dadurch kann ein Kraft- und/oder Drehmomentfluss vom Antriebsmotor über die Kurbelwelle und die Eingangswelle zur Ausgangswelle und weiter an eine vordere und/oder hintere Antriebsachse und somit an die Bodeneingriffsmittel herstellbar sein.

Nachteilig hierbei ist, dass bei diesen Nutzfahrzeugen mit der bekannten Antriebsstrangarchitektur das Getriebe entlang oder in Richtung der Längsachse und/oder einer Hochachse des Nutzfahrzeugs zu viel Bauraum benötigt. Dadurch beansprucht das Getriebe Bauraum, der für zusätzliche Bauteile und/oder eine Kabine des Nutzfahrzeugs genutzt werden könnte. Darüber hinaus weist der Schwerpunkt des Nutzfahrzeugs in den bekannten Antriebsstrangarchitekturen in Bezug zur Aufstandsfläche des Nutzfahrzeugs einen grossen Abstand auf, ist also entlang der Hochachse in Richtung der Kabine verschoben, ist also insbesondere zu hoch angeordnet, sodass die Leistung und/oder die Fahrtüchtigkeit und/oder Strassenlage des Fahrzeugs negativ beeinflusst werden. Eine Lage von rotierenden Bauteilen des Getriebes, insbesondere in einem im Nutzfahrzeug eingebauten Zustand des Getriebes, beispielsweise von Ausgangswellen oder Vorgelegewellen, bei welcher die rotierenden Bauteile einen in Bezug zur Aufstandsfläche des Nutzfahrzeugs kleinen Abstand aufweisen, also entlang der Hochachse in Richtung der Aufstandsfläche verschoben sind, wird als nachteilig angesehen, da eine Anordnung von rotierenden Bauteile in einem Ölsumpf des Getriebes als nachteilig für die Energieeffizienz des Getriebes angesehen wird. Ebenso verwenden bekannten Getriebe für gewöhnlich nur eine oder sogar keine Vorgelegewelle, die entlang oder in Richtung der Hochachse betrachtet zwischen der Eingangswelle und Ausgangswelle angeordnet sind.

Der vorliegenden Erfindung liegt daher die Aufgabe zugrunde, ein Getriebe und ein Nutzfahrzeug vorzuschlagen, durch welche die vorgenannten Probleme überwunden werden. Insbesondere sollen ein Getriebe und ein Nutzfahrzeug vorgeschlagen werden, mit welchen eine Getriebevielfalt in einem Nutzfahrzeug, insbesondere unter technischen und/oder wirtschaftlichen Gesichtspunkten, darstellbar ist und/oder das Getriebe eine kompaktere Bauweise aufweist und/oder bei dessen Einsatz in einem Nutzfahrzeug der Bauraum, insbesondere unterhalb einer Kabine und/oder zwischen Antriebsmotor und Hinterachsmodul, besser nutzbar ist und/oder die Leistung und/oder die Fahrtüchtigkeit und/oder Strassenlage des Getriebes und/oder Nutzfahrzeugs verbessert ist.

Diese Aufgabe wird durch ein Getriebe mit den Merkmalen des Anspruchs 1 und ein landwirtschaftliches oder industrielles Nutzfahrzeug mit den Merkmalen des Anspruchs 13 gelöst. Die abhängigen Ansprüche beziehen sich auf besonders vorteilhafte Ausführungsformen der Erfindung.

Erfindungsgemäß wird ein Getriebe zum Übertragen eines von einem Antriebsmotor, insbesondere eines Verbrennungsmotors oder eines Dieselmotors, erzeugten Drehmoments auf mindestens eine vordere und/oder hintere Antriebsachse eines landwirtschaftlichen oder industriellen Nutzfahrzeugs vorgeschlagen. Das Getriebe umfasst mindestens eine Hauptgetriebeeinheit. Die Hauptgetriebeeinheit wiederum umfasst eine Eingangswelle mit einer ersten Rotationsachse, insbesondere eine Längsachse der Eingangswelle, und eine Ausgangswelle, insbesondere eine erste Ausgangswelle, mit einer zweiten Rotationsachse, insbesondere eine Längsachse der Ausgangswelle, und eine erste Vorgelegewelle mit einer dritten Rotationsachse, insbesondere eine Längsachse der ersten Vorgelegewelle. Die Eingangswelle und die Ausgangswelle und die erste Vorgelegewelle, also insbesondere die erste, zweite und dritte Rotationsachse, sind parallel zueinander angeordnet. Die erste Rotationsachse liegt in einer ersten Ebene, die zweite Rotationsachse liegt in einer zweiten Ebene und die dritte Rotationsachse liegt in einer dritten Ebene. Die erste, zweite und dritte Ebene sind parallel zueinander angeordnet, wobei die erste, zweite und dritte Ebene orthogonal zu einer Getriebemittelebene, also einer Mittelebene des Getriebes, insbesondere einer vertikalen Getriebemittelebene, angeordnet und/oder ausgerichtet sind. Die erste Rotationsachse liegt in der Getriebemittelebene, bevorzugt kann die erste Rotationsachse die Schnittgerade der ersten Ebene und der Getriebemittelebene sein. Die zweite Ebene ist dabei zwischen der ersten und dritten Ebene angeordnet.

Mit anderen Worten, das Getriebe ist derart ausgestaltet, dass in einem Zustand, in welchem das Getriebe in einem Nutzfahrzeug eingebaut ist, die zweite Ebene zwischen der ersten und dritten Ebene angeordnet ist. Dabei kann die erste Ebene parallel oder kongruent zu einer durch die Längs- und Quererstreckung des Nutzfahrzeugs aufgespannte Bezugsebene angeordnet sein, insbesondere zu einer durch die Längsachse und einer Querachse des Nutzfahrzeugs aufgespannte Bezugsebene angeordnet sein. Dabei kann die erste Ebene zur Längsachse des Nutzfahrzeugs parallel ausgerichtet sein oder die Längsachse des Nutzfahrzeugs in der ersten Ebene liegen. Die zweite und dritte Ebene können entlang einer Hochachse oder einer Fahrzeugmittelebene, also einer Mittelebene des Nutzfahrzeugs, insbesondere einer vertikalen Fahrzeugmittelebene, also einer vertikalen Mittelebene des Nutzfahrzeugs, in Richtung einer Aufstandsfläche des Nutzfahrzeugs zur ersten Ebene versetzt angeordnet sein.

Die Eingangswelle kann um die erste Rotationsachse drehbar oder rotierbar sein. Die erste Rotationsachse kann insbesondere die Längsachse der Eingangswelle sein, also insbesondere die in Längsrichtung der Eingangswelle verlaufende Achse. Die Ausgangswelle kann um die zweite Rotationsachse drehbar oder rotierbar sein. Die zweite Rotationsachse kann insbesondere die Längsachse der Ausgangswelle sein, also insbesondere die in Längsrichtung der Ausgangswelle verlaufende Achse. Die erste Vorgelegewelle kann um die dritte Rotationsachse drehbar oder rotierbar sein. Die dritte Rotationsachse kann insbesondere die Längsachse der ersten Vorgelegewelle sein, also insbesondere die in Längsrichtung der ersten Vorgelegewelle verlaufende Achse.

Wesentlich für die Erfindung ist, dass die zweite Ebene, also insbesondere die Ausgangswelle, in eine zur zweiten Ebene orthogonale Richtung entlang oder in Bezug zur Getriebemittelebene, zwischen der ersten Ebene, also insbesondere der Eingangswelle, und der dritten Ebene, also insbesondere der ersten Vorgelegewelle angeordnet ist. In einem Zustand, in welchem das Getriebe in einem Nutzfahrzeug eingebaut ist, können die Getriebemittelebene und die Fahrzeugmittelebene parallel oder kongruent sein und/oder die Getriebemittelebene und die Hochachse des Nutzfahrzeugs können parallel oder kongruent sein, also die Hochachse in der Getriebemittelebene liegen. Dabei kann die zweite Ebene, insbesondere die Ausgangswelle, in eine zur zweiten Ebene orthogonale Richtung entlang oder in Bezug auf die Getriebemittelebene und die Fahrzeugmittelebene oder die Hochachse des Nutzfahrzeugs, zwischen der ersten Ebene, insbesondere der Eingangswelle, und der dritten Ebene, insbesondere der ersten Vorgelegewelle, angeordnet sein. Ein direkter Abstand zwischen Eingangswelle und Ausgangswelle kann dabei kleiner sein, als ein Abstand zwischen Eingangswelle und erster Vorgelegewelle. Der Abstand der ersten Vorgelegewelle zu einer Aufstandsfläche des Nutzfahrzeugs kann also insbesondere kleiner sein, als der Abstand der Ausgangswelle zur Aufstandsfläche und dieser wiederum kleiner als der Abstand der Eingangswelle zur Aufstandsfläche. Somit kann das Getriebe, insbesondere auch in einem im Nutzfahrzeug eingebauten Zustand, vorteilhafterweise wie folgt aufgebaut sein. Die Eingangswelle mit der ersten Rotationsachse oder der Längsachse der Eingangswelle kann als Referenzgerade angesehen werden. Entlang der Getriebemittelebene dazu verschoben, aber dazu parallel kann die Ausgangswelle mit der zweiten Rotationsachse oder zweiten Längsachse angeordnet sein, insbesondere also unterhalb der Eingangswelle angeordnet sein. Wiederum zur Ausgangswelle entlang der Getriebemittelebene verschoben, aber dazu parallel kann die erste Vorgelegewelle angeordnet sein, insbesondere also unterhalb der Ausgangswelle angeordnet sein. Dabei ist die zweite Ebene zwischen der ersten und dritten Ebene angeordnet und die erste, zweite und dritte Ebene sind orthogonal zur Getriebemittelebene. Von Vorteil weist das Getriebe dadurch entlang oder in Richtung der Getriebemittelebene, also insbesondere auch entlang der Hochachse oder Fahrzeugmittelebene, und/oder entlang oder in Richtung der ersten und/oder zweiten und/oder dritten Ebene eine kompaktere Bauweise auf. Ausserdem ist das Getriebe in einem Zustand, in welchem das Getriebe in einem Nutzfahrzeug eingebaut ist, im Wesentlichen in einer Anordnungsebene mit der Kurbelwellenachsen und der ersten Rotationsachse. Dadurch wird vorteilhafterweise eine Optimierung des Bauraums des Getriebes und des Nutzfahrzeugs, also eine kompaktere Bauweise erreicht, insbesondere in Bezug auf eine Leichtbauweise des Nutzfahrzeugs. Ebenso wird zusätzlicher Bauraum für Bauteile außerhalb des Getriebes ermöglicht. Darüber hinaus kann die Kabine tiefer, also in Richtung einer Aufstandsfläche des Nutzfahrzeugs angeordnet sein, als bekannte Kabinen in Nutzfahrzeugen. Ausserdem ist der Schwerpunkt des erfindungsgemässen Getriebes und des erfindungsgemässen Nutzfahrzeugs gegenüber den Schwerpunkten bekannter Getriebe und Nutzfahrzeuge vorteilhafterweise entlang der Getriebemittelebene und/oder der Fahrzeugmittelebene bzw. Hochachse des Nutzfahrzeugs in Richtung der dritten Ebene verschoben. Mit anderen Worten, der Schwerpunkt des erfindungsgemässen Getriebes und des erfindungsgemässen Nutzfahrzeugs weist von Vorteil einen kleineren Abstand zur Aufstandsfläche des Nutzfahrzeugs auf, als der Schwerpunkt bekannter Getriebe und Nutzfahrzeuge, ist also insbesondere entlang der Hochachse in Richtung der Aufstandsfläche des Nutzfahrzeugs verschoben. Dadurch kann vorteilhafterweise die Leistung und/oder die Fahrtüchtigkeit und/oder Strassenlage des Nutzfahrzeugs verbessert werden.

In Ausgestaltung der Erfindung beträgt ein erster orthogonaler Abstand zwischen der zweiten und der dritten Ebene mindestens ein Viertel eines zweiten orthogonalen Abstands zwischen erster und zweiter Ebene. Als orthogonaler Abstand zwischen zwei Ebenen kann im Allgemeinen der Betrag des Abstands zwischen zwei parallelen Ebenen definiert sein, insbesondere der Betrag des Abstands zwischen einem Punkt in einer der Ebenen und der weiteren Ebene. Im Allgemeinen lässt sich also die Abstandsbestimmung von zwei zueinander parallel liegenden Ebenen E: $\vec{n_E} \circ (\vec{X} - \vec{A})$ und F: $\vec{n_F} \circ (\vec{X} - \vec{B})$ auf die Abstandsbestimmung eines beliebigen Punktes P $\in$ F von der Ebene E zurückführen. Zweckmässig wählt man den Aufpunkt B der Ebenengleichung von F. Somit ergibt sich für den Abstand, also den hier definierten orthogonalen Abstand, zwischen den Ebenen E und F:

$$d(F;E) = d(B;E) \ mit \ F||E$$

Der erste orthogonale Abstand kann der orthogonale Abstand zwischen der zweiten und dritten Ebene und der zweite orthogonalen Abstand der orthogonale Abstand zwischen erster und zweiter Ebene sein. Somit ergibt sich für den ersten orthogonalen Abstand D1 zwischen der zweiten Ebene E (Bezugszeichen 114, siehe unten) und dritten Ebene F (Bezugszeichen 116, siehe unten), die in der oben beschriebenen Form vorliegen, wie folgt:

$$D1 = d(F;E) = d(B;E) \ mit \ F||E$$

Der zweite orthogonale Abstand D2 zwischen der zweiten Ebene E (Bezugszeichen 114, siehe unten), die in der oben beschriebenen Form vorliegt, und der ersten Ebene G mit G: $\vec{n_G} \circ (\vec{X} - \vec{C})$ (Bezugszeichen 112, siehe unten) lässt sich wie folgt bestimmen bzw. berechnen:

$$D2 = d(G;E) = d(C;E) \ mit \ G||E$$

Im Speziellen können der erste und zweite orthogonale Abstand auch bestimmt, insbesondere berechnet werden, indem eine erste Abstandsgerade orthogonal zur ersten, zweiten und dritten Ebene gedacht, insbesondere angelegt wird, wobei die erste Abstandsgerade die erste Rotationsachse schneidet. Der Betrag des Abstands bzw. Abstandsvektors zwischen den Schnittpunkten der ersten Abstandsgeraden mit der zweiten und dritten Ebene kann dann als erster orthogonaler Abstand und der Betrag des Abstands bzw. Abstandsvektors zwischen den Schnittpunkten der Abstandsgeraden mit der ersten und zweiten Ebene kann dann als zweiter orthogonaler Abstand bestimmbar sein. Mit anderen Worten, der erste orthogonale Abstand kann der Abstand zwischen der zweiten und dritten Ebene sein, der insbesondere entlang der Mittelebene erfassbar bzw. messbar ist. Der zweite orthogonale Abstand kann der Abstand zwischen der ersten und zweiten Ebene entlang der Mittelebene sein. Der orthogonale Abstand der dritten Ebene zur ersten Ebene kann somit die Summe des ersten und zweiten orthogonalen Abstands sein. Der zweite orthogonale Abstand kann dabei mindestens 50 mm betragen. Der erste orthogonal Abstand kann mindestens ein Viertel des zweiten orthogonalen Abstands betragen, insbesondere also $\geq$ 25% des zweiten orthogonalen Abstands, bevorzugt $\geq$ 50% des zweiten orthogonalen Abstands, besonders bevorzugt $\geq$ 75% des zweiten orthogonalen Abstands. Es gilt also zumindest:

$$D1 \geq \frac{1}{4} \times D2$$

Im Zustand, in welchem das Getriebe in einem Nutzfahrzeug eingebaut ist, kann die zweite Ebene, insbesondere die Ausgangswelle, entlang oder in Bezug auf die Fahrzeugmittelebene oder die Hochachse des Nutzfahrzeugs, um den zweiten orthogonalen Abstand zur Eingangswelle, insbesondere der ersten Ebene, in Richtung der Aufstandsfläche verschoben sein. Die dritte Ebene, insbesondere die erste Vorgelegewelle, kann entlang oder in Bezug auf die Fahrzeugmittelebene oder die Hochachse des Nutzfahrzeugs, um den ersten orthogonalen Abstand in Richtung der Aufstandsfläche verschoben sein, wobei der erste orthogonal Abstand mindestens ein Viertel des zweiten orthogonalen Abstands ist. Mit anderen Worten, die ersten Vorgelegewelle kann entlang oder in Richtung der Getriebemittelebene und/oder der Fahrzeugmittelebene oder der Hochachse des Nutzfahrzeugs entlang oder in vertikaler Richtung des Nutzfahrzeugs, insbesondere unterhalb der Ausgangswelle angeordnet sein, wobei die oben genannte Bedingung für das Verhältnis des ersten und zweiten orthogonalen Abstände zueinander gilt. Dadurch, dass der erste orthogonale Abstand mindestens ein Viertel des zweiten orthogonalen Abstands beträgt, können die oben genannten Vorteile erreicht werden, insbesondere also eine kompaktere Bauweise des Getriebes, wodurch mehr Bauraum vorhanden ist, und/oder eine verbesserte Lage des Schwerpunkts des Getriebes und des Nutzfahrzeugs und/oder eine verbesserte Symmetrie des Nutzfahrzeugs.

In Ausgestaltung der Erfindung beträgt ein dritter orthogonaler Abstand zwischen der zweiten Rotationsachse und der Getriebemittelebene mindestens ein Viertel des zweiten orthogonalen Abstands zwischen erster und zweiter Ebene. Es versteht sich von selbst, dass dabei die zweite Rotationsachse parallel zur Mittelebene ist. Als dritter orthogonaler Abstand kann der Betrag des Abstands zwischen einer Geraden und einer dazu parallelen Ebenen definiert sein. Als orthogonaler Abstand zwischen einer Gerade und einer Ebene kann im Allgemeinen der Betrag des Abstands zwischen einer parallelen Geraden und einer Ebenen definiert sein. Im Allgemeinen lässt sich die Abstandsbestimmung von einer Geraden $g: \vec{X} = \vec{A} + \alpha \cdot \vec{u}$ mit $\alpha \in R$ und einer Ebene $H: \vec{n_H} \circ (\vec{X} - \vec{D})$ die zueinander parallel liegen auf die Abstandsbestimmung eines beliebigen Punktes $P \in g$ von der Ebene H zurückführen. Zweckmäßig wählt man den Aufpunkt A der Geradengleichung von g. Somit ergibt sich für den Abstand, also den hier definierten orthogonalen Abstand, zwischen der Geraden g und der Ebene H:

$$d(g;H) = d(A;H) \; mit \; g||H$$

Der dritte orthogonale Abstand kann der orthogonale Abstand zwischen der zweiten Rotationsachse und der Getriebemittelebene sein. Somit ergibt sich für den dritten orthogonalen Abstand D3 zwischen zweiten Rotationsachse g (Bezugszeichen 106, siehe unten) und Getriebemittelebene H (Bezugszeichen 118, siehe unten), die in der oben beschriebenen Form vorliegen, wie folgt:

$$D3 = d(g;H) = d(A;H) \; mit \; g||H$$

Im Speziellen kann der dritte orthogonale Abstand ermittelt, insbesondere berechnet werden, indem eine zweite Abstandsgerade orthogonal zur Mittelebene und orthogonal zur zweiten Rotationsachse gedacht, insbesondere angelegt oder ausgebildet wird, wobei die zweite Abstandsgerade in der zweiten Ebene liegt. Der dritte orthogonale Abstand kann dann als Betrag des Abstands bzw. des Abstandsvektors zwischen den Schnittpunkten der zweiten Abstandsgerade mit der Mittelebene und der zweiten Rotationsachse ermittelt, insbesondere berechnet werden. Der dritte orthogonal Abstand kann mindestens ein Viertel des zweiten orthogonalen Abstands betragen, insbesondere also ≥ 25% des zweiten orthogonalen Abstands, bevorzugt ≥ 50% des zweiten orthogonalen Abstands, besonders bevorzugt ≥ 75% des zweiten orthogonalen Abstands. Es gilt also zumindest:

$$D3 \geq \frac{1}{4} \times D2$$

Dadurch kann die Position der Ausgangswelle zur Position der Eingangswelle und der ersten Vorlegewelle in Bezug zur Getriebemittelebene oder Fahrzeugmittelebene, versetzt angeordnet sein, insbesondere in horizontaler Richtung des Nutzfahrzeugs versetzt angeordnet sein. Mit anderen Worten, die Ausgangswelle kann entlang oder in Richtung der zweiten Ebene eine Verschiebung zur Getriebemittelebene, insbesondere zur Eingangswelle, aufweisen, wobei die oben genannte Bedingung für das Verhältnis der zweiten und dritten orthogonalen Abstände zueinander gilt. Gleiches gilt für den in einem im Nutzfahrzeug eingebaut Zustand des Getriebes, wenn die Getriebemittelebene parallel oder kongruent zur Fahrzeugmittelebene ist. Dann kann die Ausgangswelle entlang oder in Richtung der zweiten Ebene eine Verschiebung zur Eingangswelle, insbesondere zur Fahrzeugmittelebene, aufweisen, wobei die oben genannte Bedingung für das Verhältnis der zweiten und dritten orthogonalen Abstände zueinander gilt. Dadurch, dass der dritte orthogonale Abstand mindestens ein Viertel des zweiten orthogonalen Abstands beträgt, können die oben genannten Vorteile für das Getriebe und Nutzfahrzeug erreicht werden.

In Ausgestaltung der Erfindung umfasst die Hauptgetriebeeinheit eine zweite Vorlegewelle mit einer vierten Rotationsachse und/oder die vierte Rotationsachse liegt in einer vierten Ebene. Die vierte Ebene kann parallel zur ersten, zweiten und dritten Ebene angeordnet sein. Die vierte Ebene kann zwischen der ersten und dritten Ebene, bevorzugt zwischen der ersten und zweiten Ebene angeordnet sein. Die vierte Ebene kann aber auch kongruent zur zweiten Ebenen sein. Mit der zweiten Vorlegewelle kann vorteilhafterweise ein Kraft- und/oder Drehmomentfluss von der Eingangswelle zur ersten Vorlegewelle hergestellt werden. Dadurch kann vorteilhafterweise auch den Abstand zwischen der Eingangswelle und der ersten Vorlegewelle überbrückt werden. Es können auch weitere Vorlegewellen, beispielsweise eine dritte und/oder vierte und/oder fünfte Vorlegewelle vorgesehen sein, um bei Bedarf zusätzliche Funktionen zu erfüllen. Alternativ kann anstatt einer zweiten Vorlegewelle eine Kette vorgesehen sein, mit der vorteilhafterweise ein Kraft- und/oder Drehmomentfluss von der Eingangswelle zur ersten Vorlegewelle hergestellt werden kann.

In einem bevorzugten Ausführungsbeispiel ist zwischen der Eingangswelle und der Ausgangswelle ein Kraft- und/oder Drehmomentfluss nur mittelbar herstellbar. Ebenso ist zwischen der zweiten Vorlegewelle und der Ausgangswelle ein Kraft- und/oder Drehmomentfluss nur mittelbar herstellbar ist. Zwischen der Ausgangswelle und der ersten Vorgelegewelle ist ein Kraft- und/oder Drehmomentfluss nur unmittelbar herstellbar. Zwischen der zweiten Vorgelegewelle und der Eingangswelle kann ein Kraft- und/oder Drehmomentfluss nur unmittelbar herstellbar sein.

In Ausgestaltung der Erfindung umfasst das Getriebe, insbesondere das Hauptgetriebe, eine weitere Ausgangswelle, insbesondere eine zweite Ausgangswelle. Die weitere Ausganswelle kann eine fünfte Rotationsachse, insbesondere eine Längsachse der weiteren Ausgangswelle aufweisen. Die fünfte Rotationsachse kann in einer fünften Ebene liegen. Die fünfte Ebene kann zwischen der ersten und dritten Ebene, bevorzugt zwischen der ersten und zweiten Ebene oder der zweiten und dritten Ebene angeordnet sein. Die weitere Ausgangswelle kann zum Antrieb der vorderen Bodeneingriffsmittel des Nutzfahrzeugs vorgesehen sein und/oder mit dem Vorderachsmodul verbindbar sein. Dadurch kann ein Kraft- und/oder Drehmomentfluss zwischen der zweiten Ausgangswelle und der vorderen Antriebsachse herstellbar sein, sodass beispielsweise Leistung an die vordere Antriebsachse des Nutzfahrzeugs übertragen werden kann. Vorteilhafterweise kann so ein getrennter Kraft- und/oder Drehmomentfluss von der ersten Ausgangswelle zur hinteren Antriebsachse und von der zweiten Ausgangswelle zur vorderen Antriebsachse herstellbar sein.

In Ausgestaltung der Erfindung umfasst das Getriebe ein die Hauptgetriebeeinheit aufnehmendes Getriebegehäuse und/oder das Getriebegehäuse ist derart ausgebildet und angeordnet, dass, insbesondere direkt oder unmittelbar, am Getriebegehäuse ein Hinterachsmodul angeordnet ist und/oder zwischen der Hauptgetriebeeinheit und dem Hinterachsmodul ein Drehmomentfluss herstellbar ist, insbesondere unmittelbar herstellbar ist. Das Getriebe kann ein Getriebegehäuse, welches die Hauptgetriebeeinheit aufnehmen kann, und/oder ein Hinterachsgehäuse umfassen, welches das Hinterachsmodul aufnehmen kann. Das Getriebegehäuse kann eine Gehäuseabdeckung aufweisen. Das Getriebegehäuse kann in einem im Nutzfahrzeug verbauten Zustand stets im Wesentlichen den gleichen Bauraum aufweisen, also unabhängig von der Anzahl der Vorgelegewellen, und/oder im gleichen Bauraum im Nutzfahrzeug verbaut sein. Das Hinterachsgehäuse kann einen Deckel aufweisen. Das Hinterachsgehäuse kann in einem im Nutzfahrzeug verbauten Zustand stets im Wesentlichen den gleichen Bauraum aufweisen und/oder im gleichen Bauraum im Nutzfahrzeug verbaut sein. Das Getriebegehäuse und/oder das Hinterachsgehäuse können ein- oder mehrteilig ausgebildet sein. Unter einem einteilig ausgebildeten Getriebegehäuse kann insbesondere verstanden werden, dass der die Hauptgetriebeeinheit umgebende Gehäuseabschnitt, bis auf die Gehäuseabdeckung, aus einem Teil gefertigt ist, beispielsweise aus einem Guss hergestellt werden kann. Unter einem einteilig ausgebildeten Hinterachsgehäuse kann insbesondere verstanden werden, dass der das Hinterachsmodul umgebende Gehäuseabschnitt, bis auf den Deckel, aus einem Teil gefertigt ist, beispielsweise aus einem Guss hergestellt werden kann. Das Getriebegehäuse und/oder das Hinterachsgehäuse können in diesem Fall eine Öffnung aufweisen, welche mit der Gehäuseabdeckung bzw. dem Deckel verschließbar ist. Hierbei soll - obwohl das Getriebegehäuse insgesamt dann durch den die Hauptgetriebeeinheit umgebenden Gehäuseabschnitt und die Gehäuseabdeckung gebildet ist - dennoch als ein einteilig ausgebildetes Getriebegehäuse aufgefasst werden. Ebenso gilt für das Hinterachsgehäuse, das - obwohl das Hinterachsgehäuse insgesamt dann durch den das Hinterachsmodul umgebenden Gehäuseabschnitt und den Deckel gebildet ist - dennoch als ein einteilig ausgebildetes Hinterachsgehäuse aufgefasst werden. Die Gehäuseabdeckung und/oder der Deckel können das Getriebegehäuse und/oder das Hinterachsgehäuse nach außen abschliessen, ohne jedoch Bauteile des Getriebes in sich aufzunehmen. Das Getriebegehäuse und/oder das Hinterachsgehäuse können Bauteile des Getriebes in sich aufnehmen. Das Getriebegehäuse kann dabei insbesondere die Hauptgetriebeeinheit aufnehmen. Durch eine Öffnung des Getriebegehäuses und/oder eine Öffnung des Hinterachsgehäuse können die Komponenten oder Bauteile der Hauptgetriebeeinheit bzw. des Hinterachsmoduls montiert und/oder gewartet bzw. repariert werden. Alternativ zu einem einteilig ausgebildeten Getriebegehäuse und/oder einem Hinterachsgehäuse können dieses auch zwei oder mehrteilig ausgebildet sein. So könnte das Getriebegehäuse und/oder das Hinterachsgehäuse beispielsweise aus zwei im Wesentlichen gleich großen Teilen zusammengesetzt sein, wobei das so zusammengesetzte Getriebegehäuse die Hauptgetriebeeinheit und/oder das Hinterachsgehäuse das Hinterachsmodul aufnimmt bzw. zumindest größtenteils umgibt und gegebenenfalls durch eine Gehäuseabdeckung bzw. den Deckel abgeschlossen werden können. Das Hinterachsmodul, insbesondere das Hinterachsgehäuse, kann bevorzugt direkt oder unmittelbar, am Getriebegehäuse angeordnet sein. Das Getriebe kann ausserdem ein Koppelelement umfassen. Das Koppelelement kann an der Eingangswelle angeordnet sein. In einem im Nutzfahrzeug eingebauten Zustand kann zwischen dem Antriebsmotor, insbesondere der Kurbelwelle oder einer Antriebswelle des Antriebsmotors, und dem Koppelelement oder Eingangswelle eine drehfeste Verbindung herstellbar sein, beispielsweise über eine Welle-Nabe-Verbindung. Dadurch kann zwischen der Hauptgetriebeeinheit und dem Hinterachsmodul ein Drehmomentfluss herstellbar sein, insbesondere unmittelbar herstellbar sein. Insgesamt kann durch diese Massnahmen eine einfache Herstellung bzw. Montage des Getriebes ermöglicht werden. Wenn die Gehäuseteile aneinander montiert werden, ist das Getriebe zumindest größtenteils montiert und grundsätzlich funktionsbereit.

In Ausgestaltung der Erfindung umfasst das Hinterachsmodul eine hintere Antriebsachse und/oder ein Hinterachsdifferential. Das Hinterachsmodul, insbesondere das Hinterachsdifferential, kann ein Hinterachsritzel, beispielsweise ein Antriebskegelrad oder ein Kegelritzel, und ein Hinterachszahnrad, beispielsweise ein Kegel- oder Rindzahnrad, umfassen. Das Hinterachsgehäuse kann das Hinterachsmodul, insbesondere das Hinterachsdifferential und/oder zumindest teilweise die hintere Antriebsachse aufnehmen. Vorteilhafterweise ist dadurch ein modularer und/oder kompakter Aufbau des Getriebes umsetzbar.

In einer vorteilhaften Weiterbildung des Getriebes umfasst das Getriebe ein Zapfwellenmodul. Das Hinterachsmodul, insbesondere das Hinterachsgehäuse, kann zwischen dem Zapfwellenmodul und der Hauptgetriebeeinheit angeordnet sein. Das Getriebe kann eine Zapfwellen-Antriebswelle umfassen, wobei das Zapfwellenmodul insbesondere von einer Zapfwellen-Antriebswelle antreibbar sein kann. Die Zapfwellen-Antriebswelle kann insbesondere in der Eingangswelle angeordnet sein. Ein Zapfwellengehäuse kann die Bauteile des Zapfwellenmoduls aufnehmen. Die Bauteile des Zapfwellenmoduls können die Zapfwellen-Antriebswelle und/oder der Zapfenwellenstummel sowie das Zapfwellen-Getriebe sein. Die Zapfwellen-Antriebswelle kann als Vollwelle ausgeführt sein. Die Eingangswelle des Getriebes kann als Hohlwelle ausgeführt sein. Die Eingangswelle kann die Zapfwellen-Antriebswelle in sich aufnehmen. Die Zapfwellen-Antriebswelle kann in einem Zustand, bei welchem das Getriebe im Nutzfahrzeug eingebaut ist, vom Antriebsmotor antreibbar sein, insbesondere auch derart gekoppelt sein, dass die Zapfwellen-Antriebswelle mit dem Antriebsmotor antreibbar ist. Das Zapfwellenmodul, insbesondere das Zapfwellengetriebe, kann also durch die Zapfwellen-Antriebswelle mit dem Antriebsmotor durch die Eingangswelle, insbesondere auch durch das Hinterachsmodul, antriebsverbunden oder antreibbar sein. Auf diese Weise ist eine direkte und damit besonders energieeffiziente Antriebsleistungsübertragung vom Antriebsmotor zu einem Zapfwellenmodul, insbesondere Zapfwellenabtrieb des Nutzfahrzeugs möglich.

In einem konstruktiv vorteilhaften Ausführungsbeispiel umfasst das Getriebe ein Pumpengetriebe und/oder das Pumpengetriebe ist am oder im Hinterachsmodul angeordnet und mit der Zapfwellen-Antriebswelle antreibbar. In Ausgestaltung der Erfindung kann das Getriebe eine erste Pumpe umfassen, wobei die erste Pumpe mit dem Pumpengetriebe antreibbar ist. Das Pumpengetriebe kann im Hinterachsmodul angeordnet sein, insbesondere kann sich das Pumpengetriebe mit der Zapfwellen-Antriebswelle verbinden, insbesondere lösbar drehfest verbindbar sein. Das Pumpengetriebe kann eines oder mehrere Stirnradgetriebe, so genannte Idler, umfassen, um eine Kraft- und/oder ein Drehmomentfluss an eine erste Pumpe, insbesondere einen Pumpenabtrieb der ersten Pumpe zu übertragen. In einem Zustand, in welchem das Getriebe in einem Nutzfahrzeug eingebaut ist, kann mit dem Pumpengetriebe mindestens eine Hydraulik, insbesondere Haupthydraulik des Fahrzeugs, angetrieben werden. Das Pumpengetriebe kann horizontal zum Hinterachsdifferential versetzt sein. Vorteilhafterweisen kann mit dieser Massnahme das Pumpengetriebe konstruktiv einfach ausgestaltet sein. Die erste Pumpe kann an oder ausserhalb des Hinterachsmoduls, insbesondere auf einem Pumpenhalter, beispielsweise einer Platte, angeordnet sein. Die erste Pumpe kann eine Pumpenwelle, bevorzugt einen Pumpenabtrieb, besonders bevorzugt eine Durchgangswelle umfassen, die mit dem Pumpengetriebe verbindbar, insbesondere koppelbar, und/oder antreibbar ist. Das Getriebe kann auch eine zweite Pumpe umfassen. Es können die erste und zweite Pumpe mit der Pumpenwelle antreibbar sein, sodass vorteilhafterweise auch die zweite Pumpe direkt vom Pumpengetriebe antreibbar ist. Die erste Pumpe kann zwischen der zweiten Pumpe und dem Pumpengetriebe angeordnet sein. Die erste Pumpe kann mit der Pumpenwelle mit dem Pumpengetriebe verbindbar und/oder antreibbar sein. Darüber hinaus kann die zweite Pumpe unmittelbar bzw. direkt an der ersten Pumpe angeordnet sein. Dadurch können die erste und/zweite Pumpe vorteilhafterweise aufeinandergestapelt werden. Im Speziellen kann die erste Pumpe kann dabei die als Durchgangswelle ausgebildete Pumpenwelle umfassen, die mit dem Pumpengetriebe verbunden und/oder mit dem Pumpengetriebe antreibbar ist. Die zweite Pumpe kann dann ebenfalls mit der Durchgangswelle verbunden und/oder mit dem Pumpengetriebe antreibbar sein. Dadurch können vorteilhafterweise die erste und zweite Pumpe unmittelbar bzw. direkt mit dem Pumpengetriebe, und insbesondere mittels nur einer Pumpenwelle antreibbar sein. Die erste und/oder zweite Pumpe können an oder ausserhalb des Hinterachsmoduls angeordnet sein. Die erste und/oder zweite Pumpe können, in einem Zustand, in welchem das Getriebe in einem Nutzfahrzeug eingebaut ist, entlang oder in Bezug auf die Fahrzeugmittelebene oder die Hochachse des Nutzfahrzeugs, zwischen der zweiten und dritten Ebene oder in der dritten Ebene oder aber auch zwischen der dritten Ebene und der Aufstandsfläche angeordnet sein. Dadurch kann vorteilhafterweise auf eine zusätzliche Ladungspumpe für die Hydraulik verzichtet werden. Ausserdem ermöglicht dies die erste und/oder zweite Pumpe als eine selbstansaugen Pumpe zu betreiben.

Die Erfindung betrifft weiter ein landwirtschaftliches oder industrielles Nutzfahrzeug, insbesondere ein Traktor oder Schlepper oder eine Baumaschine. Das landwirtschaftliches oder industrielles Nutzfahrzeug umfasst ein Getriebe, insbesondere ein Getriebe nach einem der Ansprüche 1 bis 12. Das erfindungsgemässe Nutzfahrzeug weist die oben beschriebenen Vorteile des erfindungsgemässen Getriebes auf. In Ausgestaltung der Erfindung umfasst das landwirtschaftliches oder industrielles Nutzfahrzeug einen Antriebsmotor und das Getriebe, wobei mit dem Getriebe insbesondere ein vom Antriebsmotor erzeugtes Drehmoment auf mindestens eine vordere und/oder hintere Antriebsachse des Nutzfahrzeugs übertragbar ist. Das Getriebe umfasst mindestens eine Hauptgetriebeeinheit, und die Hauptgetriebeeinheit eine Eingangswelle mit einer ersten Rotationsachse und eine Ausgangswelle mit einer zweiten Rotationsachse und eine erste Vorgelegewelle mit einer dritten Rotationsachse. Die Eingangswelle und die Ausgangswelle und die erste Vorgelegewelle sind parallel zueinander angeordnet. Die erste Rotationsachse liegt in einer ersten Ebene, die zweite Rotationsachse in einer zweiten Ebene und die dritte Rotationsachse in einer dritten Ebene. Die erste, zweite und dritte Ebene sind parallel zueinander angeordnet, wobei die erste, zweite und dritte Ebene orthogonal zu einer Getriebemittelebene angeordnet, insbesondere ausgerichtet sind. Die erste Rotationsachse ist dabei in der Getriebemittelebene angeordnet. Ausserdem ist die zweite Ebene zwischen der ersten und dritten Ebene angeordnet. Das Getriebe ist derart im Nutzfahrzeug angeordnet, dass die Getriebemittelebene im Wesentlichen parallel oder kongruent zur Fahrzeugmittelebene ist, insbesondere dass die Getriebemittelebene parallel oder kongruent zur Fahrzeugmittelebene ist. Die erste Ebene ist im Wesentlichen parallel oder kongruent, insbesondere ist die erste Ebene parallel oder kongruent, zu einer durch die Längs- und Quererstreckung des Nutzfahrzeugs aufgespannte Bezugsebene angeordnet. Die zweite und dritte Ebene sind, insbesondere entlang einer Hochachse bzw. der Fahrzeugmittelebene, in Richtung einer Aufstandsfläche des Nutzfahrzeugs zur ersten Ebene versetzt angeordnet. Das landwirtschaftliche oder industrielle Nutzfahrzeug kann eine Kabine und ein Fahrgestell umfassen, wobei die Kabine am, insbesondere auf, dem Fahrgestell angeordnet sein kann. Das Getriebe verfügt über eine Eingangswelle, deren Achslage durch die Position der Kurbelwelle des Antriebsmotors bestimmt sein kann. Die Ausgangswelle kann längsorientiert und in derselben vertikalen Position wie die hintere Antriebsachse sein, deren Achse mit den Hinterrädern koaxial sein kann. Ebenso kann die weitere Ausgangswelle längsorientiert und in derselben vertikalen Position wie die vordere Antriebsachse sein, deren Achse mit den Vorderrädern koaxial sein kann. Die Ausgangswelle kann auf eine Seite des Nutzfahrzeugs hin eingestellt sein. Die vordere und hintere Antriebsachse kann mit der Ausgangswelle, insbesondere der ersten Ausgangswelle, antreibbar sein. Es können aber auch die hintere Antriebsachse mit der ersten Ausgangswelle und die vordere Antriebsachse mit der zweiten Ausgangswelle antreibbar sein. Das erfindungsgemässe Nutzfahrzeug weist vorteilhafterweise eine deutlich schlankere und/oder kompakter Bauweise auf und/oder das Getriebe kommt mit weniger Bauraum aus. Darüber hinaus weist das Nutzfahrzeug einen Schwerpunkt auf, der gegenüber bekannten Nutzfahrzeugen in Richtung der Aufstandsfläche verschoben ist.

Das erfindungsgemässe Getriebe, insbesondere die Hauptgetriebeeinheit, und das erfindungsgemässe Nutzfahrzeug umfassen eine grundlegende Architektur eines Getriebes mit einer Eingangswelle, einer Ausgangswelle und einer Vorgelegewelle sowie deren räumliche Anordnung und Orientierung zueinander. Diese räumliche Anordnung und Orientierung kann in verschiedenen Getriebetypen zur Anwendung kommen, insbesondere in konventionellen Lastschaltgetrieben (PST) und Teillastschaltgetrieben (PPST, partial power shift) und stufenlosen Getrieben (IVT). Die Anordnung der Bauteile des Getriebes, also insbesondere des oder der Zahnräder und/oder Kupplungen und/oder Schaltelementen, kann dabei vielfältig und verschieden sein, solange die Bedingungen der räumlichen Anordnung und Orientierung der Bauteile des erfindungsgemässen Getriebes und/oder des erfindungsgemässen Nutzfahrzeugs erfüllt sind. Darüber hinaus können das Getriebe und/oder Nutzfahrzeug die folgenden alternativen Ausbildungen und Anordnungen aufweisen. Die zweite und weitere Vorgelegewellen können Zwischenzahnräder (engl. Idler) umfassen, also insbesondere Zahnräder aufweisen, die bevorzugt direkt am Getriebegehäuse abgestützt sind und mit zwei anderen Zahnrädern, die auf zwei anderen Wellen angeordnet sind, im Eingriff stehen. Die Kurbelwellenachsen der Kurbelwelle und eine erste Rotationsachse der Eingangswelle des Motors können zueinander versetzt sein oder in einem Winkel zueinander angeordnet sein. Die Eingangswelle des Getriebes, insbesondere der Hauptgetriebeeinheit, kann entweder direkt oder indirekt, beispielsweise mit einer Antriebswelle oder mit einem Koppelelement oder mit einer verzahnten oder geschraubten Verbindung, mit der Kurbelwelle des Motors verbunden und/oder antreibbar sein. Ebenso können die Ausgangswelle und die hintere Antriebsachse entlang oder in Richtung der Hochachse des Nutzfahrzeugs zueinander versetzt sein, also insbesondere vertikal zueinander versetzt sein, bevorzugt mit einem hypoiden Zahnradsatz. Die hintere Antriebsachse und die unabhängigen hinteren Radaufhängungen können zueinander versetzt sein. Die Kurbelwellenachsen und somit die Kurbelwelle kann horizontal zur Fahrzeugmittelebene versetzt sein. Ebenso können das Getriebe und/oder das Nutzfahrzeug weitere Schnittstellen zur Leistungsabgabe zum Vorderradantrieb, zur Zapfwelle und zu Hilfsantrieben, beispielsweise Pumpen etc. aufweisen.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:

Fig. 1    eine schematische Darstellung eines ersten Ausführungsbeispiels eines erfindungsgemässen landwirtschaftlichen oder industriellen Nutzfahrzeugs mit einem erfindungsgemässen Getriebe, und

Fig. 2     eine schematische Darstellung eines ersten Ausführungsbeispiels des erfindungsgemässen Getriebes, und

Fig. 3     eine schematische Darstellung eines zweiten Ausführungsbeispiels des erfindungsgemässen Getriebes, und

Fig. 4     eine detaillierte schematische Darstellung des ersten Ausführungsbeispiels des erfindungsgemässen Nutzfahrzeugs mit erfindungsgemässem Getriebe, und

Fig. 5     eine detaillierte schematische Darstellung des ersten Ausführungsbeispiels des erfindungsgemässen Nutzfahrzeugs mit erfindungsgemässem Getriebe, und

Fig. 6     eine detaillierte schematische Darstellung des ersten Ausführungsbeispiels des erfindungsgemässen Nutzfahrzeugs mit erfindungsgemässem Getriebe.

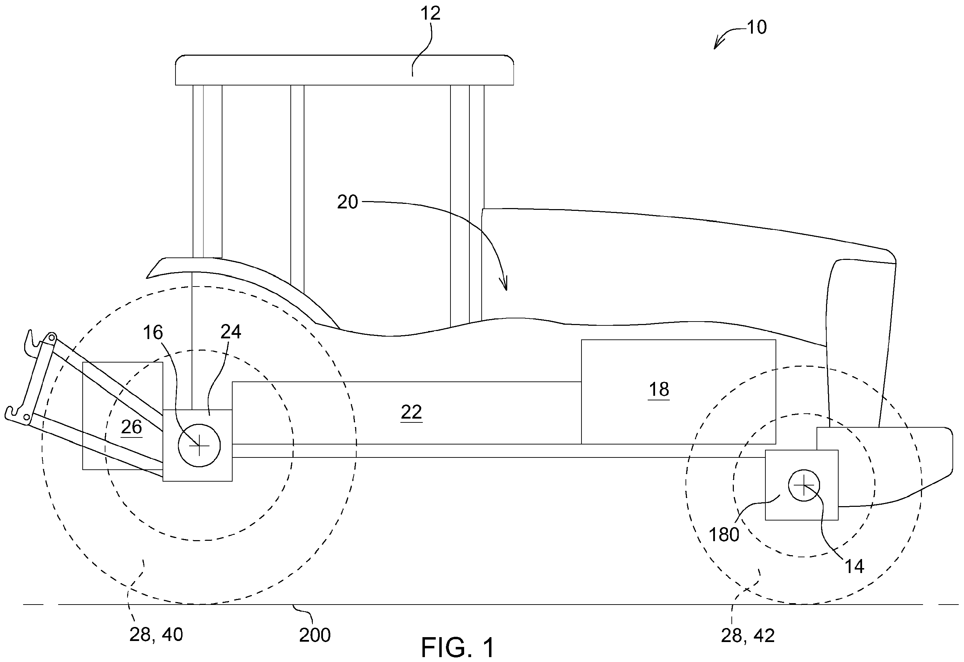

Figur 1 zeigt eine schematische Darstellung eines ersten Ausführungsbeispiels eines erfindungsgemässen landwirtschaftlichen oder industriellen Nutzfahrzeugs 10 mit einem erfindungsgemässen Getriebe 20. Der grundsätzliche Aufbau eines Nutzfahrzeugs 10 wird als dem Fachmann bekannt angenommen. Das Nutzfahrzeug 10 umfasst eine Kabine 12, eine vordere Antriebsachse 14 und eine hintere Antriebsachse 16. Die hintere Antriebsachse 16 kann permanent und die vordere Antriebsachse 14 kann bedarfsweise zuschaltbar oder permanent angetrieben werden.

Das Nutzfahrzeug 10 umfasst ferner einen Antriebsmotor 18, der als Verbrennungskraftmaschine ausgeführt sein kann. Das Getriebe 20 weist eine Getriebestruktur auf, die, wie nachfolgend beschrieben, aus verschiedenen einzelnen Getriebemodulen zusammengesetzt sein kann. Die vorliegend beschriebene Getriebestruktur kann im Kraft- und Drehmomentfluss, ausgehend vom Antriebsmotor 18, ein erfindungsgemässes Getriebe 20, und ein Hinterachsmodul 22 und ein Zapfwellenmodul 24 aufweisen.

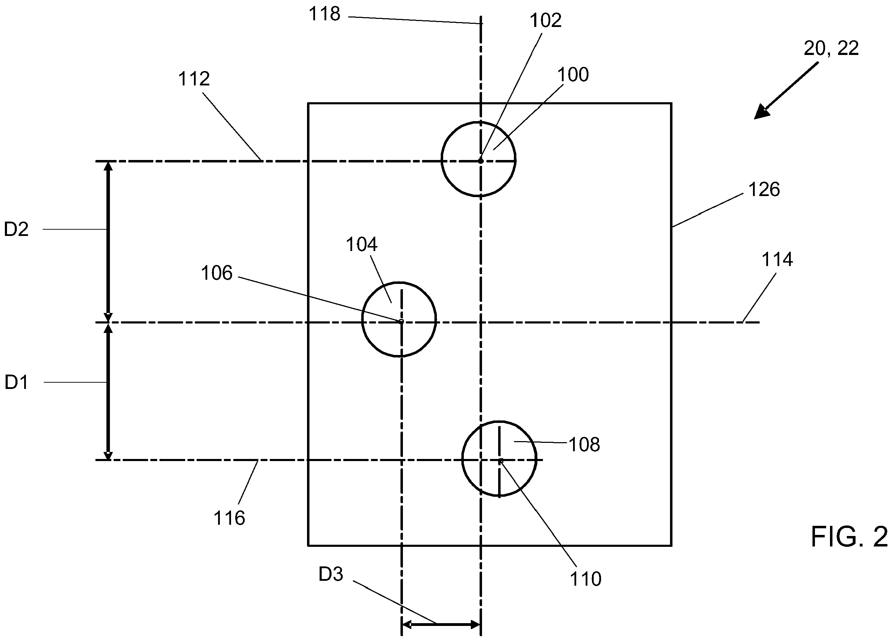

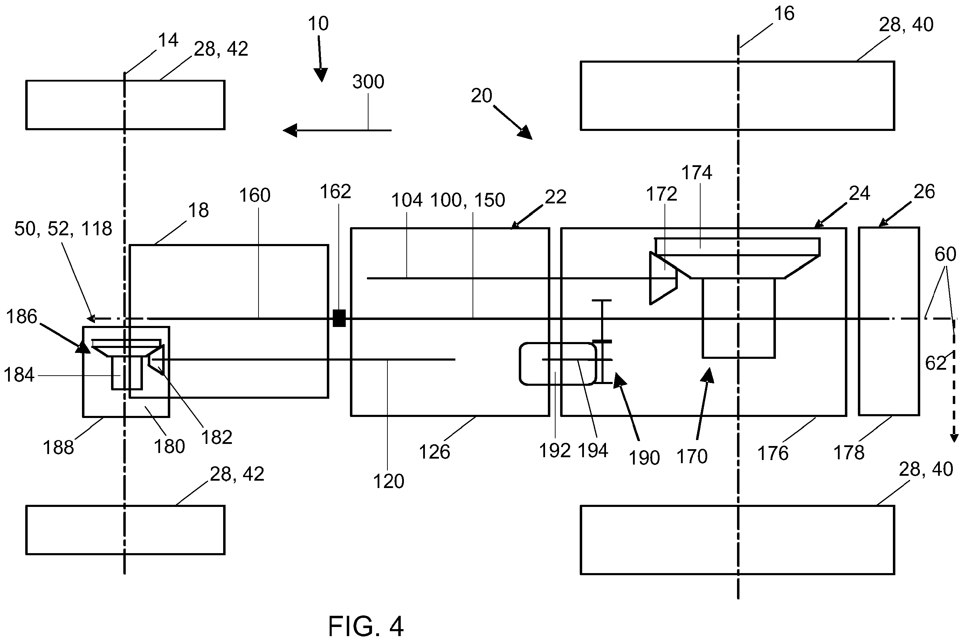

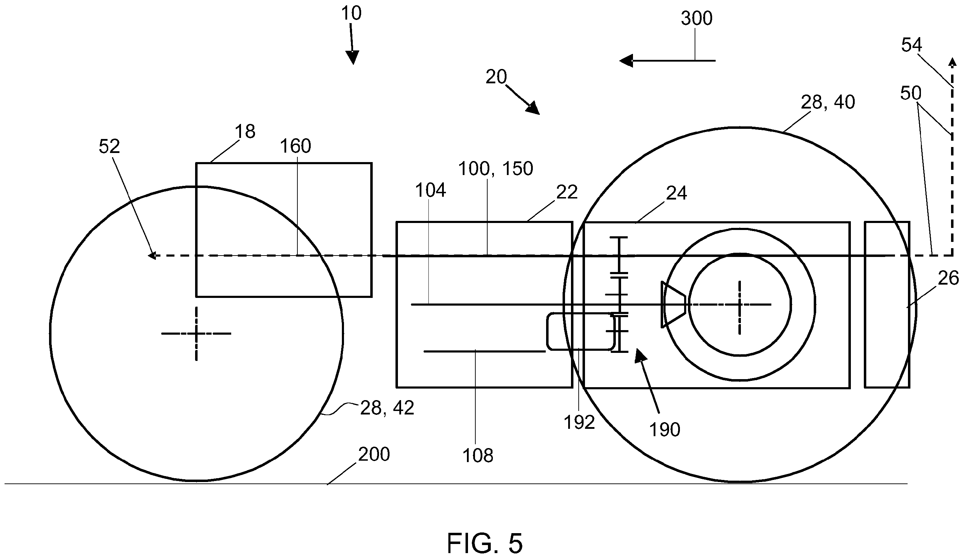

Dabei ist das Getriebe 20, insbesondere eine Hauptgetriebeeinheit 22, dem Antriebsmotor 18 entgegen der Vorwärtsfahrrichtung (siehe Figuren 4 und 5, Bezugszeichen 300) des Nutzfahrzeugs und/oder entlang einer Längsachse (siehe Figuren 4 und 5, Bezugszeichen 52) des Nutzfahrzeugs nachgelagert. Das Getriebe 20, insbesondere die Hauptgetriebeeinheit 22, ist mit dem Antriebsmotor 18 antriebsverbunden und/oder kann mit dem Antriebsmotor 18 antreibbar sein. Das Hinterachsmodul 22 ist der Hauptgetriebeeinheit 22 nachgelagert. Dabei ist das Hinterachsmodul 22 mit der Hauptgetriebeeinheit antriebsverbunden und/oder antreibbar. Mit dem gezeigten Getriebe 20 lässt sich ein Kraft- und Drehmoment, also die Antriebsleistung, des Antriebsmotors 18 mit unterschiedlichen Gangstufen auf die Ausgangswelle (siehe Figuren 2 bis 6, Bezugzeichen 104) und/oder eine weitere Ausgangswelle (siehe Figur 4, Bezugszeichen 120) des Getriebes 20 übertragen.

Die Ausgangswelle 104 wiederum kann in Antriebsverbindung mit der hinteren und/oder vorderen Antriebsachse 14, 16 stehen. Ebenso kann aber auch die Ausgangswelle 104 in Antriebsverbindung mit der hinteren Antriebsachse 16 und die weiteren Ausgangswelle 120 in Antriebsverbindung mit der vorderen Antriebsachse 14 stehen. Es können also die vordere und/oder hintere Antriebsachse 14, 16 mit der Ausgangswelle 104 antreibbar sein, insbesondere kann ein Kraft- und Drehmoment von der Ausgangswelle 104 auf die vordere und/oder hintere Antriebsachse 14, 16 übertragen werden. Es kann aber auch die hintere Antriebsachse 16 mit der Ausgangswelle 104 und/oder die vorderen Antriebsachse 14 mit der weiteren Ausgangswelle 120 antreibbar sein, insbesondere kann ein Kraft- und Drehmoment von der Ausgangswelle 104 auf die hintere Antriebsachse 16 übertragen werden und/oder ein Kraft- und Drehmoment von der weiteren Ausgangswelle 120 auf die vordere Antriebsachse 14 übertragen werden. Die vordere und/oder hintere Antriebsachse 14, 16 wandeln eine Drehung der Ausgangswelle 104 und/oder der weiteren Ausgangswelle 120 in eine Drehung eines oder mehrerer Bodeneingriffsmittel 28 und somit in einen Vorschub des Nutzfahrzeugs um. Das Nutzfahrzeug kann daher abhängig von einer im Getriebe 20, insbesondere in der Hauptgetriebeeinheit 22, gewählten Gangstufe mit unterschiedlicher Drehzahl angetrieben werden. Folglich ist ein mit dem Getriebe 20 ausgestattetes Nutzfahrzeug 10 abhängig von der im Getriebe gewählten Gangstufe in unterschiedlichen Geschwindigkeitsbereichen bewegbar.

Das Zugfahrzeug 10 kann eines oder mehrere Bodeneingriffsmittel 28, hier in Form von Rädern 40, 42 dargestellt, aufweisen, welche mit einem Untergrund zur Übertragung von Antriebskräften in Eingriff stehen und/oder durch die sich das Zugfahrzeug 10 auf dem Untergrund abstützt. Das Zugfahrzeug 10 kann ausserdem ein Fahrgestell aufweisen, wobei das Fahrgestell insbesondere von den an der vorderen und hinteren Antriebsachse 14, 16 aufgehängten Rädern 28 getragen werden kann.

Figur 2 zeigt eine schematische Darstellung eines ersten Ausführungsbeispiels des erfindungsgemässen Getriebes 20. Das in Figur 2 gezeigte Getriebe 20 ist eine detaillierte schematische Darstellung des in Figur 1 gezeigten Getriebes 20, insbesondere des Hauptgetriebes 22. Im Folgenden wird deshalb lediglich auf in Figur 1 nicht gezeigte Details eingegangen. Das Nutzfahrzeug 10 kann das Getriebe 20, wie in Figur 2 dargestellt, umfassen.

Die mindestens eine Hauptgetriebeeinheit 22 des Getriebes 20 umfasst eine Eingangswelle 100 mit einer ersten Rotationsachse 102 und eine Ausgangswelle 104 mit einer zweiten Rotationsachse 106 und eine erste Vorgelegewelle 108 mit einer dritten Rotationsachse 110. Die Eingangswelle 100 und die Ausgangswelle 104 und die erste Vorgelegewelle 108 sind parallel zueinander angeordnet, wobei die erste Rotationsachse 102 in einer ersten Ebene 112, die zweite Rotationsachse 106 in einer zweiten Ebene 114 und die dritte Rotationsachse 110 in einer dritten Ebene 116 liegt. Die erste, zweite und dritte Ebene 112, 114, 116 sind ebenfalls parallel zueinander angeordnet, wobei die erste, zweite und dritte Ebene 112, 114, 116 orthogonal zu einer Getriebemittelebene 118 angeordnet sind, und die erste Rotationsachse 102 in der Getriebemittelebene 118 angeordnet ist. Die zweite Ebene 114, also die Ebene, in welcher die Ausgangswelle 104 angeordnet ist, ist zwischen der ersten und dritten Ebene 112, 116 angeordnet. Das Getriebe 20 kann ausserdem ein die Hauptgetriebeeinheit 22 aufnehmendes Getriebegehäuse 126 umfassen. Wesentlich für die Erfindung ist, dass aufgrund beschriebenen Anordnung, die zweite Ebene 114, insbesondere die Ausgangswelle 104, in eine zur zweiten Ebene orthogonale Richtung entlang oder in Bezug auf die Getriebemittelebene 118, zwischen der ersten Ebene 112, insbesondere der Eingangswelle 100, und der dritten Ebene 116, insbesondere der ersten Vorgelegewelle 108 angeordnet ist. Dadurch kann vorteilhafterweise eine optimale kompakte Packungsdichte des Getriebes 20, insbesondere der Hauptgetriebeeinheit 22, erreicht werden, insbesondere eine kompakte räumliche Anordnung der Eingangs-, Ausgangs- und ersten Vorgelegewelle 100, 104, 108 im Getriebegehäuse 126. Der Schwerpunkt kann somit vorteilhafterweise gegenüber bekannten Getrieben in eine zur zweiten Ebene orthogonalen Richtung entlang der Getriebemittelebene 118 in Richtung der dritten Ebene 116 verschoben sein.

Im Speziellen kann ein erster orthogonaler Abstand D1 zwischen der zweiten und der dritten Ebene 114, 116 mindestens ein Viertel eines zweiten orthogonalen Abstands D2 zwischen erster und zweiter Ebene 112, 114 betragen. Es gilt also:

$$D1 \geq \frac{1}{4} \times D2$$

Im Weiteren kann ein dritter orthogonaler Abstand D3 zwischen der zweiten Rotationsachse 106 und der Getriebemittelebene 118 mindestens ein Viertel des zweiten orthogonalen Abstands D2 zwischen erster und zweiter Ebene 112, 114 betragen. Es gilt also:

$$D3 \geq \frac{1}{4} \times D2$$

Aufgrund dieser zusätzlichen Randbedingungen kann vorteilhafterweise eine optimale und/oder kompakte räumliche Packungsdichte des Getriebes 20, insbesondere der Hauptgetriebeeinheit 22, erreicht werden, insbesondere eine kompakte räumliche Anordnung der Eingangs-, Ausgangs- und ersten Vorgelegewelle 100, 104, 108 im Getriebegehäuse 126.

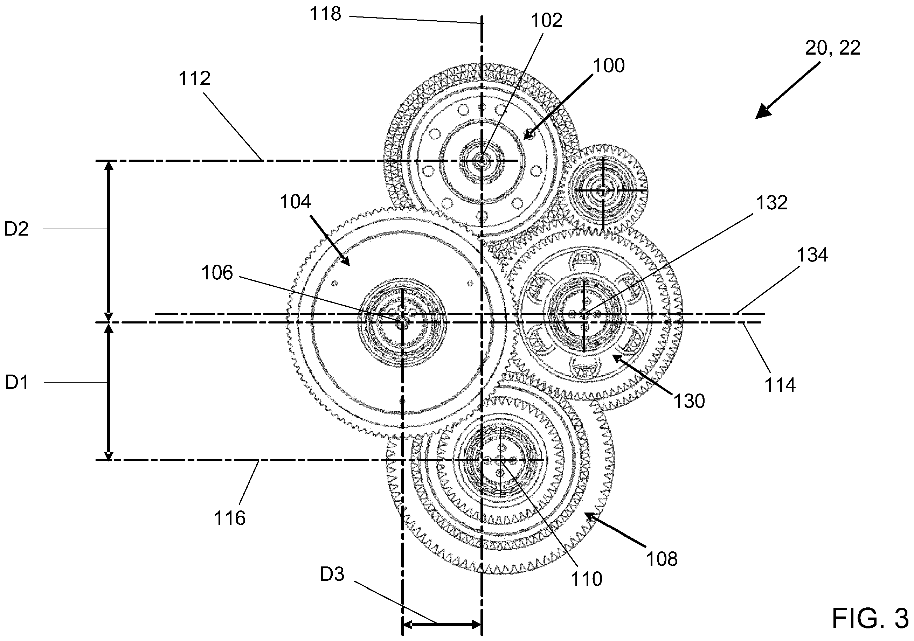

Figur 3 zeigt eine schematische Darstellung eines zweiten Ausführungsbeispiels des erfindungsgemässen Getriebes 20. Das in Figur 3 gezeigte Getriebe 20 entspricht im Wesentlichen dem in den Figuren 1 und 2 gezeigten Getriebe 20 sodass im Folgenden lediglich auf Details und/oder Unterschiede eingegangen wird. Das Nutzfahrzeug 10 kann das Getriebe 20, wie in Figur 3 dargestellt, umfassen. Die Hauptgetriebeeinheit 22 umfasst eine zweite Vorgelegewelle 130 mit einer vierten Rotationsachse 132. Die vierte Rotationsachse 132 liegt in einer vierten Ebene 134. Die vierte Ebene 134 ist parallel zur ersten, zweiten und dritten Ebene 112, 114, 116 angeordnet. Die vierte Ebene 134 ist zwischen der ersten und zweiten Ebene 112, 114 angeordnet. Die vierte Ebene 134 kann aber auch zwischen der zweiten und dritten Ebene 114, 116 oder in der zweiten Ebene 114 angeordnet sein. Dadurch kann zwischen der Eingangswelle 100 und der Ausgangswelle 104 ein Drehmomentfluss und/oder zwischen der zweiten Vorgelegewelle 130 und der Ausgangswelle 104 ein Drehmomentfluss nur mittelbar herstellbar sein. Darüber hinaus kann zwischen der Ausgangswelle 104 und der ersten Vorgelegewelle 108 ein Drehmomentfluss nur unmittelbar herstellbar sein. Vorteilhafterweise kann dadurch ein Abstand von der Eingangswelle 100 zur ersten Vorgelegewelle 108 mit kämmenden Zahnrädern überbrückt werden, und insbesondere ein Kraft- und/oder Drehmomentfluss von der Eingangswelle 100 zur Ausgangswelle 108 hergestellt werden. Darüber hinaus können mit einer zweiten Vorgelegewelle 130 und gegebenenfalls weiteren Vorgelegewellen bei Bedarf zusätzliche Funktionen des Getriebes 20, beispielsweise zusätzliche Gänge, realisiert werden.

Figur 4 zeigt eine detaillierte schematische Darstellung des ersten Ausführungsbeispiels des erfindungsgemässen Nutzfahrzeugs 10 mit erfindungsgemässem Getriebe 20. Das in Figur 4 gezeigte Nutzfahrzeug 10 und das Getriebe 20 entsprechen im Wesentlichen den in den Figuren 1 bis 3 gezeigten Nutzfahrzeugen 10 bzw. Getrieben 20, sodass im Folgenden lediglich auf Details und/oder Unterschiede eingegangen wird. Entgegen der Vorwärtsfahrrichtung 300 des Nutzfahrzeugs 10 und/oder entlang der Längsachse 52 und/oder in eine zur zweiten Ebene parallele oder kongruente Richtung entlang der Getriebemittelebene 118 bzw. der Fahrzeugmittelebene 50 sind die Komponenten des Nutzfahrzeugs wie folgt hintereinander, insbesondere direkt hintereinander und/oder benachbart angeordnet. Zunächst der Antriebsmotor 18, dann das Getriebe mit der Hauptgetriebeeinheit 22, dahinter das Hinterachsmodul 24 und hinter dem Hinterachsmodul 24 das Zapfwellenmodul 26.

Zusätzlich kann das Getriebe 20 ein Vorderachsmodul 180 mit einem Vorderachsdifferential 186 und/oder eine vorderen Antriebsachse 14 umfassen. Das Vorderachsgehäuse 188 kann das Vorderachsmodul 180, insbesondere das Vorderachsdifferenzial 186 und/oder zumindest teilweise die vordere Antriebsachse 14 aufnehmen. Das Vorderachsdifferential 186 kann ein Vorderachsritzel 182, beispielsweise ein Antriebskegelrad oder ein Kegelritzel, sowie ein Vorderachszahnrad 184, beispielsweise ein Kegel- oder Rindzahnrad, umfassen. Das Hinterachsmodul kann das Hinterachsdifferential 170 und/oder die hintere Antriebsachse 16 umfassen. Das Hinterachsgehäuse 176 kann das Hinterachsmodul 24, insbesondere das Hinterachsdifferential 170 und/oder zumindest teilweise die hintere Antriebsachse 16 aufnehmen. Das Hinterachsdifferential 170 kann ein Hinterachsritzel 172, beispielsweise ein Antriebskegelrad oder ein Kegelritzel, sowie ein Hinterachszahnrad 174, beispielsweise ein Kegel- oder Rindzahnrad, umfassen. Der Kraft- und Drehmomentfluss kann wie folgt beschrieben werden. Zunächst wird vom Antriebsmotor 18 über die Kurbelwelle 160 ein Kraft- Drehmomentfluss an die Eingangswelle 100 der Hauptgetriebeeinheit 22 erzeugt. Die Kurbelwelle 160 kann mit der Eingangswelle 100 entweder direkt oder beispielsweise mit einem Koppelelement 162 oder mittels einer Antriebswelle (nicht dargestellt) oder mit einer verzahnten oder geschraubten Verbindung, verbunden und/oder antreibbar sein. Dadurch ist die Eingangswelle 100 mit der Kurbelwelle 160 antreibbar und eine Kraft und/oder ein Drehmoment von der Kurbelwelle 160 auf die Eingangswelle 100 übertragbar. Der Kraft- und Drehmomentfluss wird dann von der Ausgangswelle 104 an das Hinterachsmodul und/oder an das Vorderachsmodul 180 weitergegeben, sodass eine Drehbewegung der hinteren und/oder vorderen Antriebsachse 14, 16 und somit eine Bewegung der Bodeneingriffsmittel 28, insbesondere eine Drehbewegung der hinteren und vorderen Räder 40, 42 herstellbar ist. Ebenso kann aber auch ein Kraft- und Drehmomentfluss von der Ausgangswelle 104 an das Hinterachsmodul und/oder von einer weiteren Ausgangswelle 120 an das Vorderachsmodul 180 hergestellt bzw. erzeugt werden.

Das Getriebe 20 kann ein die Hauptgetriebeeinheit 22 aufnehmendes Getriebegehäuse 126 umfassen, wobei das Getriebegehäuse 126 zumindest die Eingangswelle 100, die Ausgangswelle 104 und die erste Vorgelegewelle 108 aufnehmen kann. Das Getriebe 20, insbesondere die Hauptgetriebeeinheit 22, kann aber auch, wie in Figur 4 gezeigt eine weitere Ausgangswelle 120 umfassen. Das Getriebegehäuse 126 kann auch die weitere Ausgangswelle 120 aufnehmen. Das Getriebegehäuse 126 kann derart ausgebildet sein, dass das Hinterachsmodul 24 am Getriebegehäuse 126 angeordnet ist, und/oder zwischen der Hauptgetriebeeinheit 22 und dem Hinterachsmodul 24 ein Drehmomentfluss herstellbar ist. Die Hauptgetriebeeinheit 22, insbesondere das Getriebegehäuse 126, kann also derart angeordnet und/oder ausgebildet sein, dass das Hinterachsmodul 24, insbesondere das Hinterachsgehäuse 176, am Getriebegehäuse 126 angeordnet ist, insbesondere das Hinterachsmodul 24, bevorzugt das Hinterachsgehäuse 176, dem Getriebegehäuse 120 in Richtung des Kraft- und Drehmomentfluss nachgeordnet ist.

Das Getriebe 20 umfasst ausserdem ein Zapfwellenmodul 26. Ausserdem umfasst das Getriebe, insbesondere das Zapfwellenmodul 26 eine Zapfwellen-Antriebswelle 150. Die Zapfwellen-Antriebswelle 150 kann mit dem Antriebsmotor 20, insbesondere der Kurbelwelle 160, entweder direkt oder beispielsweise mit einem weiteren Koppelelement oder einer verzahnten oder geschraubten Verbindung oder mittels einer weiteren Antriebswelle (nicht dargestellt) verbunden sein. Dadurch ist die Zapfwellen-Antriebswelle 150 mit der Kurbelwelle 160 antreibbar und eine Kraft und/oder ein Drehmoment von der Kurbelwelle 160 auf die Zapfwellen-Antriebswelle 150 übertragbar. Die Zapfwellen-Antriebswelle 150 ist in der Eingangswelle 100 angeordnet. Die Zapfwellen-Antriebswelle 150 kann zumindest teilweise in der Hauptgetriebeeinheit 22, insbesondere dem Getriebegehäuse 126, und/oder dem Hinterachsmodul 24, insbesondere dem Hinterachsgehäuse 176, und/oder dem Zapfwellenmodul 26, insbesondere einen Zapfwellengehäuse 178, angeordnet sein. Ebenso kann das Zapfwellenmodul 26 einen Zapfwellenstummel (nicht dargestellt) umfassen. Das Zapfwellengehäuse 178 kann die Zapfwellen-Antriebswelle 150 zumindest teilweise und den Zapfwellenstummel aufnehmen. Wie in Figur 4 dargestellt, ist das Hinterachsmodul 24, insbesondere das Hinterachsgehäuse 176, zwischen dem Zapfwellenmodul 26, insbesondere dem Zapfwellengehäuse 178, und der Hauptgetriebeeinheit 22, insbesondere dem Getriebegehäuse 126, angeordnet.

Das Getriebe 20 umfasst ein Pumpengetriebe 190. Das Pumpengetriebe 190 ist zumindest teilweise, insbesondere vollständige, im Hinterachsmodul 24, insbesondere im Hinterachsgehäuse 176, angeordnet. Darüber hinaus ist das Pumpengetriebe 190 mit der Zapfwellen-Antriebswelle 150 antreibbar. Somit ist ein Kraft- und Drehmomentfluss von der Zapfwellen-Antriebswelle 150 zum Pumpengetriebe 190 herstellbar, insbesondere eine Kraft und/oder ein Drehmoment von Zapfwellen-Antriebswelle 150 auf das Pumpengetriebe 190 übertragbar.

Das Getriebe 20 umfasst eine erste Pumpe 192, wobei die erste Pumpe 192 mit dem Pumpengetriebe 190 antreibbar ist. Die erste Pumpe 192 umfasst eine Pumpenwelle 194, die mit dem Pumpengetriebe 190 verbindbar und/oder antreibbar ist, beispielsweise direkt oder mit einer verzahnten oder geschraubten Verbindung verbunden und/oder antreibbar sein. Die erste Pumpe 192 ist am Hinterachsmodul 24 angeordnet, bevorzugt mit dem Hinterachsgehäuse 176 verbunden oder am Hinterachsgehäuse 176 befestigt, insbesondere lösbar befestigt. Das Getriebe kann eine zweite Pumpe (nicht dargestellt) umfassen. Die erste Pumpe 192 und zweite Pumpe können mit der Pumpenwelle 194 antreibbar sein.

In einem Zustand, in welchem das Getriebe 20 in einem Nutzfahrzeug 10 angeordnet, also insbesondere eingebaut ist, können die Getriebemittelebene 118 und die Fahrzeugmittelebene 50 kongruent sein oder die Getriebemittelebene kann in der Hochachse 54 des Nutzfahrzeugs liegen. Dabei kann die erste Ebene 100, parallel oder kongruent zu einer durch die Längs- und Quererstreckung des Nutzfahrzeugs aufgespannte Bezugsebene 60 angeordnet sein, insbesondere zu der durch die Längsachse 52 und einer Querachse 62 des Nutzfahrzeugs 10 aufgespannte Bezugsebene 60 angeordnet sein. Die zweite und dritte Ebene 104, 108 sind entlang der Hochachse 54 oder Fahrzeugmittelebene 50, insbesondere in eine vertikale Richtung des Nutzfahrzeugs 10 entlang der Hochachse 54 oder Fahrzeugmittelebene 50, in Richtung einer Aufstandsfläche 200 des Nutzfahrzeugs 10 zur ersten Ebene 100 versetzt angeordnet. Dabei ist die zweite Ebene 104 zwischen der ersten Ebene 100 und der dritten Ebene 108 angeordnet.

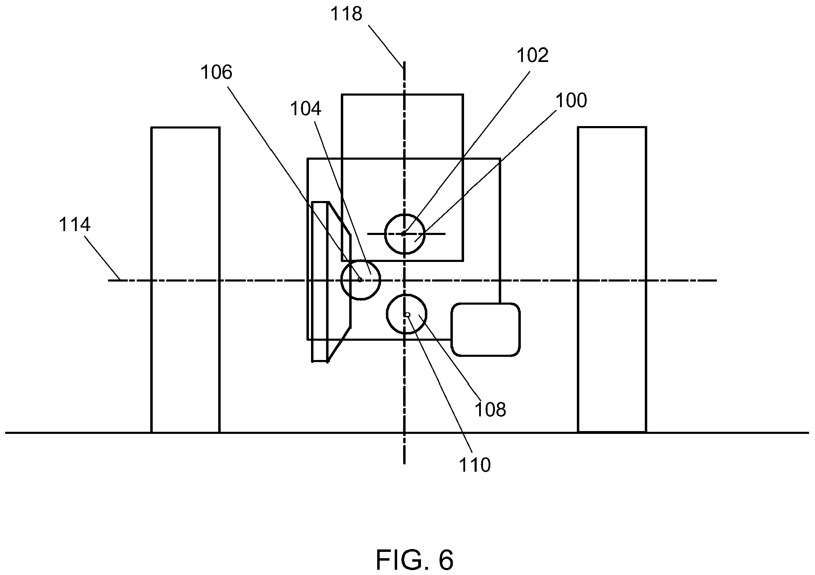

Die Figuren 5 und 6 zeigen eine detaillierte schematische Darstellung des ersten Ausführungsbeispiels des erfindungsgemässen Nutzfahrzeugs 10 mit erfindungsgemässem Getriebe 20. Das in den Figuren 5 und 6 gezeigte Nutzfahrzeug 10 und das Getriebe 20 entsprechen im Wesentlichen den in den Figuren 1 bis 4 gezeigten Nutzfahrzeugen 10 bzw. Getrieben 20, sodass im Folgenden lediglich auf Details und/oder Unterschiede eingegangen wird. Das in den Figuren 5 und 6 gezeigte Getriebe 20 umfasst keine weitere Ausgangswelle 120 und kein Vorderachsmodul 180, sodass ein Kraft- und Drehmoment des Antriebsmotors 18 des in den Figuren 5 und 6 gezeigten Nutzfahrzeugs 10 lediglich über die Ausgangswelle 104 an die hintere Antriebsachse 16 übertragen werden kann.

Die im Folgenden genannten Vorteile gelten für alle gezeigten Figuren. Vorteilhafterweise ist dadurch die Position des Schwerpunkts des Getriebes 20 oder des Nutzfahrzeugs 10 entlang der Hochachse 54 in Richtung der Aufstandsfläche 200 verschoben. Der Schwerpunkt ist also insbesondere in eine vertikale Richtung des Nutzfahrzeugs 10 entlang der Hochachse 54 oder Fahrzeugmittelebene 50 in Richtung der Aufstandsfläche 200 verschoben. Von Vorteil wird dadurch eine Optimierung des Bauraums des Getriebes und des Nutzfahrzeugs erreicht, insbesondere in Bezug auf eine kompakte Bauweise und/oder Leichtbauweise des Nutzfahrzeugs 10. Ebenso wird zusätzlicher Bauraum für Bauteile außerhalb des Getriebes 20 ermöglicht. Darüber hinaus kann die Kabine 12 tiefer, also in Richtung einer Aufstandsfläche 200 des Nutzfahrzeugs 10 angeordnet sein, als Kabinen 12 in bekannten Nutzfahrzeugen 10.

**Patentansprüche**

1. Getriebe zum Übertragen eines von einem Antriebsmotor (18) erzeugten Drehmoments auf mindestens eine vordere und/oder hintere Antriebsachse (14, 16) eines landwirtschaftlichen oder industriellen Nutzfahrzeugs (10), mit mindestens einer Hauptgetriebeeinheit (22), wobei die Hauptgetriebeeinheit (22) eine Eingangswelle (100) mit einer ersten Rotationsachse (102) und eine Ausgangswelle (104) mit einer zweiten Rotationsachse (106) und eine erste Vorgelegewelle (108) mit einer dritten Rotationsachse (110) umfasst, wobei die Eingangswelle (100) und die Ausgangswelle (104) und die erste Vorgelegewelle (108) parallel zueinander angeordnet sind, wobei die erste Rotationsachse (102) in einer ersten Ebene (112), die zweite Rotationsachse (106) in einer zweiten Ebene (114) und die dritte Rotationsachse (110) in einer dritten Ebene (116) liegt, und die erste, zweite und dritte Ebene (112, 114, 116) parallel zueinander angeordnet sind, wobei die erste, zweite und dritte Ebene (112, 114, 116) orthogonal zu einer Getriebemittelebene (118) angeordnet sind, und die erste Rotationsachse (102) in der Getriebemittelebene (118) angeordnet ist, **dadurch gekennzeichnet, dass** die zweite Ebene (114) zwischen der ersten und dritten Ebene (112, 116) angeordnet ist.

2. Getriebe nach Anspruch 1, **dadurch gekennzeichnet, dass** ein erster orthogonaler Abstand (D1) zwischen der zweiten und der dritten Ebene (114, 116) mindestens ein Viertel eines zweiten orthogonalen Abstands (D2) zwischen erster und zweiter Ebene (112, 114) beträgt.

3. Getriebe nach mindestens einem der vorangehenden Ansprüche 1 oder 2, **dadurch gekennzeichnet, dass** ein dritter orthogonaler Abstand (D3) zwischen der zweiten Rotationsachse (104) und der Getriebemittelebene (118) mindestens ein Viertel des zweiten orthogonalen Abstands (D2) zwischen erster und zweiter Ebene (112, 114) beträgt.

4. Getriebe nach mindestens einem der vorangehenden Ansprüche, **dadurch gekennzeichnet, dass** die Hauptgetriebeeinheit (22) eine zweite Vorgelegewelle (130) mit einer vierten Rotationsachse (134) umfasst und/oder die vierte Rotationsachse (134) in einer vierten Ebene (134) liegt, und die vierte Ebene (134) parallel zur ersten, zweiten und dritten Ebene (112, 114, 116) angeordnet ist, und/oder die vierte Ebene (134) zwischen der ersten und zweiten Ebene (112, 114) angeordnet ist.

5. Getriebe nach mindestens einem der vorangehenden Ansprüche, **dadurch gekennzeichnet, dass** zwischen der Eingangswelle (100) und der Ausgangswelle (104) ein Drehmomentfluss nur mittelbar herstellbar ist und/oder zwischen der zweiten Vorgelegewelle (130) und der Ausgangswelle (104) ein Drehmomentfluss nur mittelbar herstellbar ist.

6. Getriebe nach mindestens einem der vorangehenden Ansprüche, **dadurch gekennzeichnet, dass** zwischen der Ausgangswelle (104) und der ersten Vorgelegewelle (108) ein Drehmomentfluss nur unmittelbar herstellbar ist.

7. Getriebe nach mindestens einem der vorangehenden Ansprüche, **dadurch gekennzeichnet, dass** das Getriebe (20), insbesondere die Hauptgetriebeeinheit (22), eine weitere Ausgangswelle (120) umfasst.

8. Getriebe nach mindestens einem der vorangehenden Ansprüche, **dadurch gekennzeichnet, dass** das Getriebe (20) ein die Hauptgetriebeeinheit (22) aufnehmendes Getriebegehäuse (126) umfasst, und/oder das Getriebegehäuse (126) derart ausgebildet und angeordnet ist, dass am Getriebegehäuse (126) ein Hinterachsmodul (24) angeordnet ist, und/oder zwischen der Hauptgetriebeeinheit (22) und dem Hinterachsmodul (24) ein Drehmomentfluss herstellbar ist.

9. Getriebe nach mindestens einem der vorangehenden Ansprüche, **dadurch gekennzeichnet, dass** das Hinterachsmodul (24) ein Hinterachsdifferential (170) und/oder die hintere Antriebsachse (16) umfasst und/oder das Hinterachsmodul (24), insbesondere das Hinterachsdifferential (170), ein Hinterachsritzel (172) und ein Hinterachszahnrad (174) umfasst.

10. Getriebe nach mindestens einem der vorangehenden Ansprüche, **dadurch gekennzeichnet, dass** das Getriebe (20) ein Zapfwellenmodul (26) umfasst, und/oder das Hinterachsmodul (24) zwischen dem Zapfwellenmodul (26) und der Hauptgetriebeeinheit (22) angeordnet ist, und/oder das Getriebe (20) eine Zapfwellen-Antriebswelle (150) umfasst.

11. Getriebe nach mindestens einem der vorangehenden Ansprüche, **dadurch gekennzeichnet, dass** das Getriebe (20) ein Pumpengetriebe (190) umfasst, und/oder das Pumpengetriebe (190) zumindest teilweise im Hinterachsmodul (24) angeordnet ist und mit der Zapfwellen-Antriebswelle (150) antreibbar ist.

12. Getriebe nach mindestens einem der vorangehenden Ansprüche, **dadurch gekennzeichnet, dass** das Getriebe (20) eine erste Pumpe (192) umfasst, wobei die erste Pumpe (192) mit dem Pumpengetriebe (190) antreibbar ist, und/oder die erste Pumpe (192) am Hinterachsmoduls (24) angeordnet ist, und/oder das Getriebe (20) eine zweite Pumpe umfasst, und/oder die erste Pumpe (192) eine Pumpenwelle (194) umfasst, die mit dem Pumpengetriebe (190) verbindbar und/oder antreibbar ist, und/oder die erste und zweite Pumpe (192) mit der Pumpenwelle (194) antreibbar sind.

13. Landwirtschaftliches oder industrielles Nutzfahrzeug, insbesondere ein Traktor oder Schlepper, umfassend ein Getriebe (20) nach einem der Ansprüche 1 bis 12.

14. Landwirtschaftliches oder industrielles Nutzfahrzeug nach Anspruch 13, **dadurch gekennzeichnet, dass** das Nutzfahrzeug (10) einen Antriebsmotor (18) umfasst, wobei das Getriebe (20) mindestens eine Hauptgetriebeeinheit (22) umfasst, und die Hauptgetriebeeinheit (22) eine Eingangswelle (100) mit einer ersten Rotationsachse (102) und eine Ausgangswelle (104) mit einer zweiten Rotationsachse (106) und eine erste Vorgelegewelle (108) mit einer dritten Rotationsachse (110) umfasst, wobei die Eingangswelle (100) und die Ausgangswelle (104) und die erste Vorgelegewelle (108) parallel zueinander angeordnet sind, wobei die erste Rotationsachse (104) in einer ersten Ebene (112), die zweite Rotationsachse (106) in einer zweiten Ebene (114) und die dritte Rotationsachse (110) in einer dritten Ebene (116) liegt, und die erste, zweite und dritte Ebene (112, 114, 116) parallel zueinander angeordnet sind, wobei die erste, zweite und dritte Ebene (112, 114, 116) orthogonal zu einer Getriebemittelebene (118) ausgerichtet sind, und die erste Rotationsachse (102) in der Getriebemittelebene (118) angeordnet ist, wobei die zweite Ebene (114) zwischen der ersten und dritten Ebene (112, 116) angeordnet ist, und das Getriebe (20) ist derart im Nutzfahrzeug (10) angeordnet, dass die Getriebemittelebene (118) im Wesentlichen parallel oder kongruent zu einer Fahrzeugmittelebene (50) ist.

15. Landwirtschaftliches oder industrielles Nutzfahrzeug nach Anspruch 13 oder 14, **dadurch gekennzeichnet, dass** die erste Ebene (112) im Wesentlichen parallel oder kongruent zu einer durch die Längs- und Quererstreckung des Nutzfahrzeugs aufgespannte Bezugsebene (60) angeordnet ist, und die zweite und dritte Ebene (114, 116) in Richtung einer Aufstandsfläche (200) des Nutzfahrzeugs (10) zur ersten Ebene (112) versetzt angeordnet sind.

FIG. 1

20, 22

126

114

102

100

108

110

118

104

106

112

116

D3

D2

D1

FIG. 2

FIG. 3

FIG. 4

EP 4 023 480 A2

FIG. 5

EP 4 023 480 A2

FIG. 6